(19) **Europäisches Patentamt**

**European Patent Office**

**Office européen des brevets**

(11) **EP 1 275 118 B1**

(12) **EUROPEAN PATENT SPECIFICATION**

(45) Date of publication and mention
of the grant of the patent:
**11.05.2005 Bulletin 2005/19**

(21) Application number: **01918102.3**

(22) Date of filing: **30.03.2001**

(51) Int Cl.⁷: **H01B 1/04**, C01B 31/02

(86) International application number:
**PCT/SE2001/000696**

(87) International publication number:
**WO 2001/075902 (11.10.2001 Gazette 2001/41)**

(54) **POWER CABLE**

ENERGIEKABEL

CABLE

(84) Designated Contracting States:
**AT BE CH CY DE DK ES FI FR GB GR IE IT LI LU MC NL PT SE TR**

(30) Priority: **30.03.2000 SE 0001123**

(43) Date of publication of application:
**15.01.2003 Bulletin 2003/03**

(73) Proprietor: **ABB AB**
**721 83 Västeras (SE)**

(72) Inventors:
• **HJORTSTAM, Olof**
**S-725 96 Väster s (SE)**
• **ISBERG, Peter**
**S-725 92 Väster s (SE)**
• **SÖDERHOLM, Svante**
**S-722 14 Väster s (SE)**
• **KORSKE, H kan**
**S-722 20 Väster s (SE)**

(74) Representative: **Dahlstrand, Björn et al**
**ABB Group Services Center AB**
**Legal & Compliance/Intellectual Property**
**721 78 Västeras (SE)**

(56) References cited:
**EP-A1- 1 052 654          WO-A1-98/39250**
**US-A- 5 530 206          US-A- 5 627 140**
**US-A- 5 698 140**

## Description

## TECHNICAL FIELD

The present invention relates to a power cable. More particularly the invention concerns new alternatives for a power cable's conductor material, the design of a power cable containing the new conductor material, current control in said power cable and a method for it's production.

## BACKGROUND OF THE INVENTION

Copper and aluminium are used as conductor materials in most power cables today. Copper for electrical use is manufactured by an electrolytic process resulting in at least 99.9% purity. Copper has very good electric conductivity, is easy to connect and has high tensile strength. The problem with using copper is that the availability of raw material is limited and copper is listed as a toxic metal. Aluminium used as conductor material is 99.7% pure and is produced electrolytically from bauxite. The technical disadvantages of aluminium compared with copper, such as inferior conductivity, cold creep and a tendency to oxidise, are counterbalanced by commercial advantages such as low and stable price and good availability. The disadvantages mentioned also make aluminium unsuitable for use in small conductors with an area up to $25mm^2$. Another disadvantage is that large amounts of energy are consumed in the production of aluminium. There are therefore good reasons for seeking alternative materials for conductors.

In 1985 a third allotrope of carbon was discovered. Hollow spherical/tubular molecules consisting of $sp^2$-hybridised carbon arranged in hexagons and pentagons, were identified as products of experiments in which graphite was vaporised by a laser. This discovery was published in "$C_{60}$: Buckminsterfullerene", Kroto H. W, Heath J.R, O'Brien S.C, Curl R.F and Smalley R.E, Nature vol. 318, p162, 1985. Such molecules consist of at least 32 carbon atoms and the most common and stable form of these structures is a spherical molecule consisting of 60 carbon atoms. These hollow spherical/tubular molecules are called fullerenes. A spherical molecule consisting of 60 carbon atoms, $C_{60}$, is called a "buckminster fullerene" or a "bucky ball". In the $C_{60}$ molecule each carbon atom is bonded to three other carbon atoms and the binding is mainly $sp^2$ with an $sp^3$ contribution.

Fullerenes exist as open tubes 0.7 to 1.5 nm in diameter and at least 20 $\mu$m in length and as closed tubes having hemispherical end-caps containing six pentagons at both ends. Such fullerenes are also called carbon nanotubes. Carbon nanotubes can exist in two highly symmetrical structures namely "zig-zag" and "armchair" structures. These names arise from the pattern which is seen around a carbon nanotube's periphery if it is cut in a direction across it's length i.e. a zig-zag pattern or a pattern which looks like the seat and arm rests of an armchair. In practice most carbon nanotubes do not have these highly symmetrical structures but structures consisting of hexagons oriented in a helical formation around the axis of the carbon nanotube. A designation system for carbon nanotubes is described in "Electronic Structure of Chiral Graphene Tubules" by Saito R, Fujita M, Dresselhaus G, and Dresselhaus M. S, Appl. Phys. Lett. 60, pp2204-2206, 1992.

The helical structure and diameter of a carbon nanotube can be represented by the vector, $C$, connecting two crystallographically equivalent sites on a sheet of graphite, where;

$$C = na_1 + ma_2 \equiv (n,m)$$

and n and m are integers where $n \geq m$, and $a_1$ and $a_2$ are the graphite structure's unit vectors. A cylinder is formed when a graphite sheet is rolled up in such a way that the vector's two end points i.e. the two crystallographically equivalent sites, are superimposed. m = 0 for all zig-zag tubes and n = m for all airmchair-type tubes. All carbon nanotubes can be described by two figures (n,m).

Carbon nanotubes can have either metallic or semiconducting properties depending on their diameter and helicity, as described by White C.T, Robertson D.H, och Mintmire J.W, Phys. Rev. B47, pp5485-5488, 1993; "Abstract of Second C60 Symposium", Endo M, Fujiwara H, Fukunga E, Japan Chemical Society, Tokyo, pp101-104, 1992. To have metallic properties:

$$2n + m = 3q$$

where q is an integer. All (n,n) carbon nanotubes and a third of all (n,m) carbon nanotubes, where n is not equal to m, have metallic properties.

According to theoretical models, carbon nanotubes are one-dimensional ballistic conductors whose resistance does not depend on the mean free path between electron collisions. The resistance of these ballistic one-dimensional conductors is therefore independent of their length and evidence supporting this is available from many experiments.

Carbon nanotubes have extreme mechanical properties such as high tensile strength and flexibility. Conduction losses are low in the direction of the tube's length and the tubes have low density. They are environmentally friendly and heat-and-cold resistant. Multilayer fullerenes exist where a smaller fullerene structure is contained in a larger fullerene structure. These spherical or tubular fullerene structures are called multi-wall fullerenes. All of the hitherto mentioned fullerene structures are produced naturally when lightning strikes an object containing carbon.

To produce fullerenes synthetically, vaporised carbon is cooled and condensed in an inert atmosphere. A carbon source must be heated until carbon is vaporised and one way of doing this is by utilising energy from an electric arc between two carbon electrodes where the electrodes act as the carbon source. Carbon from one or both of the electrodes is eroded away in the vicinity of the electric arc and is vaporised. This must be carried out in an inert atmosphere in order to produce pure carbon nanotubes. The carbon vapour is cooled to enable the growth of fullerene molecules in the vapour. This is achieved by using a carrier gas to transport the carbon vapour to a collector-plate on which fullerene molecules are condensed among graphite soot. This method is described in US 5,227,038 "Electric Arc Process for Making Fullerenes", Smalley et al; and in "Carbon Nanotubes", Ebbesen et al, Annual Review of Materials Science, vol. 24, p235, 1994.

The electric arc method produces a mixture of spherical and tubular fullerenes. Most of the carbon nanotubes produced are multi-wall nanotubes having at least two concentric layers. Single-wall nanotubes are preferred for electrical applications as they have fewer defects than multi-wall nanotubes, as few as one in a thousand single-wall carbon nanotubes have defects, and are therefore better conductors than multi-wall carbon nanotubes of the same diameter. More particularly, single-wall nanotubes of the armchair type or of the (n, m)-type where $2n+m=3q$ are preferred due to their metallic conductivity.

It is known that using a mixture of carbon and transition metals from group VI or VIII, for example nickel, molybdenum, cobalt, iron or platinum, in the electric arc method gives an increased yield of single-wall carbon nanotubes. The transition metals and carbon are vaporized simultaneously and the metals act as catalysts as reported in "Single-shell Carbon Nanotubes of 1 nm Diameter", Iijima et al, Nature, vol 363, p603, 1993 and "Improving Conditions Toward Isolating Single-shell Carbon Nanotubes", Lambert et al. Chem. Phys. Letters, vol. 226, p364, 1994. The inner cavities of carbon nanotubes can be filled with atoms/molecules of carbon and/or other elements/compounds which was reported in "Fullerenes with metals inside", Chai et al, J. Phys. Chem. vol 95, p7564, 1991, alternatively carbon nanotubes can be doped with potassium or bromine which has been shown to decrease the resistance of carbon nanotubes (see "Carbon nanotubes as molecular quantum wires", Dekker S, Physics Today, p 22, May 1999).

An alternative carbon nanotube production method is pyrolysis, for example the catalytic pyrolysis of acetylene within an aluminium oxide template is described in WO 99/25652. The aluminium oxide template is produced by anodizing a 99.99% pure aluminium substrate in a suitable acid bath. The aluminium oxide template contains uniform parallel pores in which a metal catalyst is precipitated, electrochemically for example. Carbon nanotubes are generated by the pyrolysis of a hydrocarbon or carbon monoxide gas inside the pores where there is at least one open end of a carbon nanotube at the aluminium oxide/air interface. The outer diameter of the carbon nanotubes formed corresponds to the diameter of pores in the template.

One method of producing single-wall carbon nanotubes it to use one or more lasers to vaporise a carbon source containing one or more transition metals in a furnace at around 1200°C. The laser-vaporisation method is better than the electric arc method in that it allows better control of the process. The process can be driven continually and it gives a higher yield of single-wall carbon nanotubes. About 80% of the deposited material consists of carbon nanotubes. Furthermore, the carbon nanotubes are purer and of better quality. (See Guo T, Nikolaev P, Thess A, Colbert D.T, Smalley R.E, Chem. Phys. Lett. 243, p49, 1995.

When they condense, single-wall carbon nanotubes have a tendency to form groups containing 10 to 1000 parallel single-wall carbon nanotubes. These so-called ropes, have a diameter of 5-20 nm. Carbon nanotube ropes exhibit two-dimensional triangular geometry and it is believed that the carbon nanotubes are held together by Van der Waals forces. The ropes are mainly metallic and the (10,10) tube-type is usually the dominating component of the ropes.

In WO 98/39250 Smalley *et al* suggest a method for producing continuous metallic carbon nanotube fibres at least 1 mm in length, containing over $10^6$ single-wall carbon nanotubes having lengths between 50 and 500 nm. The continuous fibres are produced in complex processes in which fibres grow from an ordered microscopic arrangement of pure single-wall carbon nanotubes on a substrate. Once the substrate with the carbon nanotubes has been prepared, an end-cap from the uppermost end of the carbon nanotubes is removed by oxidation and the carbon nanotubes are then put into contact with a metal catalyst. Vaporised carbon, which is produced by laser vaporisation of graphite, for example, reacts with the open ends if they are heated to between 1100-1300°C. The apparatus in which the continuous metallic carbon nanotubes are produced has to be designed to ensure that the carbon nanotubes' open ends are always situated in the zone in which they can grow.

Medium- to high-voltage power cables (1 kV or higher) comprise one or more conductors normally surrounded by an inner semiconducting layer, a layer of insulation and an outer semiconducting layer around said insulating layer. A thicker layer of insulation must be used for high-voltage applications, which increases the diameter of the cable.

Potentially very high current densities (over $1 \times 10^6$ A/cm$^2$) can obtained in individual carbon nanotubes, which means that a conductor consisting of carbon nanotubes can be made to be extremely compact. It is possible to optimise carbon nanotubes' electrical properties by varying their diameter, the number of concentric layers and their helicity to adapt their electrical properties as required. Wang and de Heer, in the "Symposium on Energy Landscapes in Physics, (session WC35.02) March 1999, reported that electrons are conducted through carbon nanotubes (up to 5 μm long) without generating heat at room temperature. Today's superconductors have to be cooled down to very low temperatures in order to achieve current densities similar to those attained in individual carbon nanotubes.

Electric field strength is defined as the force that is experienced by unit charge. The field strength can be determined with the help of field lines. The more dense the field lines, the greater the field strength. If copper and aluminium conductors in medium- and high-voltage cables are replaced by carbon nanotube fibres as suggested by Smalley *et al* certain problems would arise. The conductor's small radius would lead to an extremely high field in the vicinity of the conductor, probably higher than what conventional insulation materials could endure. The conductor's small size would bring about a very high thermal strain on the insulation material in the vicinity of the conductor interface, which could cause the material to melt and/or break down quickly.

## SUMMARY OF THE INVENTION

One aim of the present invention is to provide a power cable, having one or more conductors, with low conduction losses and being able to carry high current densities. Another aim is to provide a power cable in which the risk of cavities and pores in the cable's insulation system, which can lead to partial discharges at high field strengths, is minimised/eliminated. Another aim is to minimise/eliminate problems arising due to the expansion coefficients of different materials used as insulation and semiconducting layers. A further aim is to control the current in said power cable.

These objects of the invention are achieved by utilising a power cable including at least one conductor comprising nanostructures arranged in a matrix. The term nanostructures includes all structures having a diameter in the range 0.1 to 100 nm. This includes structures such as open and closed, single- and multi-wall nanotubes, fullerenes, nanospheres, nanoribbons, nanoropes and nanofibres as well as nanotubes, nanoropes or nanofibres woven, plaited or twisted into a layer or a sheath.

It is advantageous for a conductor to have high mechanical strength, low conduction losses, low density, high heat-and-cold resistance and to be environmentally friendly and easy to recycle. Carbon-based material fulfils these demands. One way of solving the problems mentioned in the background of the invention concerning the breakdown of insulation material around a small nanostructure is to design a conductor having substantially homogeneously distributed individual nanostructures in a matrix. If the nanostructures are in contact with each other, the matrix contains up to about 98 volume % nanostructures. If the nanostructures are dispersed in a metal matrix, the matrix contains less than 98 volume % nanostructures.

It is to be understood that matrix means a material in which individual nanostructures are arranged. The matrix is for example a polymer, ceramic, metal, non-metal, gel, fluid, an organic or inorganic material. The matrix can even comprise a thin layer of metal, gold for example, which wholly or partly covers the nanostructures providing metallic contact between adjacent nanostructures. A metal matrix decreases the contact resistance and improves the conduction between individual nanostructures, which leads to conductors having low conduction losses. Carbon-containing material, such as graphite, amorphous carbon and other fullerenes, can also be used as matrix material. Utilising carbon-containing material does not adversely effect the conductor's conductivity and it leads to a simple and cost-effective process for the production of conductors because further treatment of the powder deposited on production of carbon nanostructures is not necessary.

The carbon nanotubes used are, for example, metallic, semiconducting, of the (n,n) or (n,m) varieties, single-wall, multi-wall, doped with an alkali metal such as potassium or a halogen such as bromine to reduce the resistance of the nanostructures, or contain atoms of carbon or other elements in their inner cavities. The nanostructures utilised are either one, or a combination of two or more of the varieties mentioned above. The length of individual nanotubes is preferably at least 1 μm in order to utilise the ballistic conductivity of the nanotubes.

The nanostructures are substantially homogeneously dispersed in a matrix. The nanostructures can be intercalated i.e. ions/atoms/molecules are inserted or incorporated between nanostructures such as nanotubes, nanoropes or nanofibres. The nanostructure material is intercalated with metals, for example, to provide metallic contact between individual single-wall carbon nanotubes, or other substances to create interstices that decrease the interaction between nanostructures. Alkali metals, in group II of the periodic table, work well as intercalants. They have a valence electron i.e. a single electron in the atom's outer shell. The valence electron is easily donated due to the atom's low ionization energy and this creates a positive ion as well as a charge carrier. There are other intercalants that accept charge carriers and intercalants that decrease the interaction between individual nanostructures.

By designing a conductor comprising of substantially homogeneously dispersed individual nanostructures in a matrix, the effective current density will be lower and the electric field is spread out over a greater area which decreases the concentration of the electric field in the vicinity of the conductor, significantly increasing the interface between the nanostructures and the surrounding material.

If the conductors are extruded, a majority of the nanostructures are oriented along the length of the conductors due to the flow pattern through the extrusion nozzle. The conductors can also be produced by compressing nanostructures with matrix material, alternatively by melting matrix material with nanostructure material under high pressure or by casting. A method similar to that for producing superconductors is also possible, i.e. nanostructures are mixed with matrix material in powder form, the mixture is pressed into a metal tube, heat treated and the substance is drawn and/or rolled into wire.

Another way of solving the problem with breakdown of insulation material and of avoiding a high electric field around the conductor is by utilizing a hollow conductor i.e. the conductor/s are arranged in one or more concentric layers. This increases the conductor's outer radius, which decreases the electric field concentration as well as increasing the area. The volume within the hollow conductor/s is filled with insulation or matrix material through which heat is conducted, or it contains reinforcement comprising steel, kevlar or carbon nanostructure-containing-material which increases the cable's tensile strength, and/or a single/multi-mode optic fibre. The reinforcement can also be used in conjunction with solid, i.e. non-hollow, conductors. These ways of producing carbon nanostructure-based conductors require a relatively low volume of nanostructures in order to attain a desired current density.

In another preferred embodiment of the invention, multi-wall nanostructures having a small diameter, less than 5nm, and preferably just two layers are utilised. The outer layer of these nanostructures acts as a shield for the inner conducting layer.

A cable's insulation material comprises, for example, a thermoplastic such as low/high-density polyethylene, low/high-density polypropylene, polybutylethylene, polymethylpentene, a fluoropolymer, such as Teflon™, polyvinylchloride, crosslinked material, such as crosslinked polyethylene, rubber material, such as ethylene propylene rubber or silicone rubber. The semiconducting layers are constituted of the same material as the insulation material but contain conducting material such as carbon black, metal or nanostructures such as carbon nanotubes with semiconducting/metallic properties. The individual layers of the insulation system are in contact with each other and in a preferred embodiment of the invention they are joined by the extrusion of radially adjacent layers. It is improtant to minimise the risk of forming cavities or pores in the insulation system, which can lead to partial discharges in the insulation material at high electric field strengths.

If one of the above mentioned (insulation) materials is used as matrix material, it would be possible to produce the whole cable from the same base material. Polyethylene can for example be used for the insulation, in the semiconducting layers by including some conducting material, such as carbon black, as well as matrix material. This eliminates the problem of attaining good adhesion between different materials, minimises problems due to the expansion of different materials in the presence of a temperature gradient and simplifies the cable production process. All of the layers within the cable, i.e. the insulation, the semiconducting layers, and outer covering are extruded together around the conductor/s. In order to produce a cable according to the present invention, the conductors, or even the whole cable are extruded in a simple extrusion process. The power cable's components are extruded, or wound, in radially adjacent layers and then preferably, the cable is vulcanised to impart improved elasticity, strength and stability.

A further advantage of the present invention is that the current in the cable can be controlled in several ways. One way of controlling the current is to apply pressure to the cable to improve/worsen the contact/conductivity between the nanostructures or between the matrix material and the nanostructures in the conductor. Another possibility is to influence the nanosructures' or matrix material's resistance using a magnetic field, alternatively by utilising the magneto-rerstrictive effect of the matrix material. A further possibility is to utilise the piezoelectric effect of the matrix material. Furthermore electromagnetic waves such as microwaves or light can be utilised, to change the conductivity of the conductor material. A further possibility is via diffusion, to utilise hydrogen absorption by nanostructures, which influences their conductivity. A further possibility is to change the conductor's temperature.

**BRIEF DESCRIPTION OF THE DRAWING**

A greater understanding of the invention may be obtained by reference to the accompanying drawing, when considered in conjunction with the subsequent description of the preferred embodiments, in which;

Fig 1 shows a three-dimensional view of a power cable having three conductors according to a first embodiment of the present invention

Fig 2 shows a three-dimensional view of a power cable having four conductors according to second embodiment of the present invention

Fig 3 shows a three-dimensional view of a power cable having one conductor according to a third embodiment of the present invention

Fig 4 shows a three-dimensional view of a coaxial power cable having hollow conductors and an optic fibre at its centre.

**DESCRIPTION OF THE PREFERRED EMBODIMENTS**

The present invention concerns all types of electric cables to supply electricity, for both DC and AC transmission, for supplying machines as well as for signal transmission within the communications field. The present invention particularly concerns power cables for high frequency applications i.e. greater than 1kHz, more particularly greater than 10kHz. Some preferred embodiments of the invention will now be described.

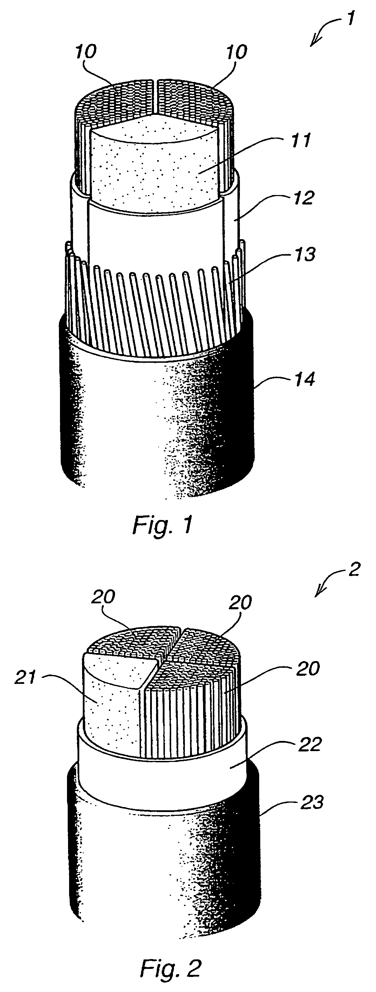

A power cable 1 according to a first embodiment of the present invention is shown in figure 1. It comprises, two copper, or aluminium, conductors 10; a third conductor 11 containing nanostructurs such as carbon nanotubes; insulation 12; a concentric screen 13 of metal wire for example; and an outer covering 14. It is possible to replace the screen of metal wire 13 with a braided screen, metal foil, tape or a material containing nanostructures.

Figure 2 shows a power cable 2, which comprises four conductors where one conductor 21 contains nanostructures and the other conductors 20 consist of copper or aluminium, for example. The conductors do not have to be of the same size, as shown. One of the conductors 20,21 is earthed. The conductors are surrounded by insulation material 22 and an outer covering 23.

The electric load on the cable's insulation material is decreased if semiconducting layers are placed around the insulation material. The semiconducting layers form equipotential surfaces and the electric field is relatively evenly spread out over the insulation material. In this way the risk of breakdown of the insulation material due to local concentrations of the electric field are minimised. The outer semiconducting layer in a cable can be maintained at a controlled potential, for example earth potential. Semiconducting layers are placed at both sides of the insulation material.

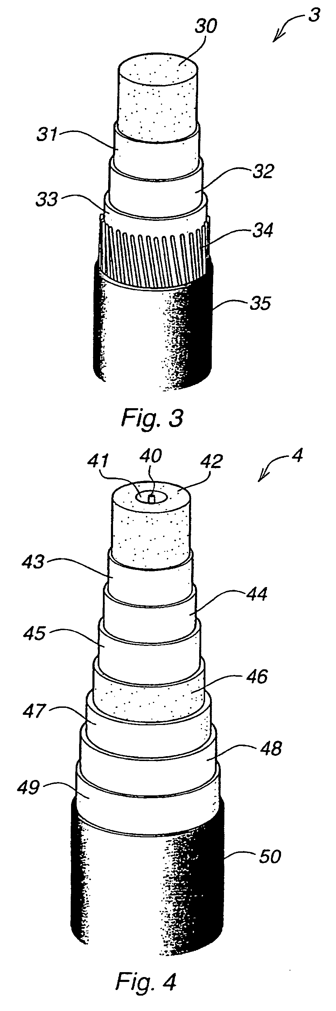

Figure 3 shows a power cable 3, with one conductor 30, containing nanostructures, which is surrounded by an inner semiconducting layer 31, insulation 32, and an outer semiconducting layer 33, which can be earthed and a screen of metal wire 34. The cable comprises, inner and outer semiconducting layers 31,33, containing carbon nanotubes for example.

Several concentric conductors, each having it's own insulation system can be incorporated into a power cable comprising insulation and semiconducting material as shown in figure 4. Figure 4 shows a cable 4, comprising a hollow conductor 42, that contains nanostructures, which is surrounded by a first semiconducting layer 43, insulation 44, a second semiconducting layer, 45, a concentric conductor 46, that contains nanostructures, a third semiconducting layer 47, insulation 48, a fourth semiconducting layer 49, and an outer covering 50. The hole in the centre of the cable 41 is, for example, filled with insulation material, nanostructure-containing material, reinforcement or a single/multi-mode optic fibre 40. Optic fibres are not susceptible to electric or magnetic interference, which allows their incorporation into a power cable. They are arranged to transmit optical signals and/or monitor the cable. The concentric conductor that contains nanostructures 46 can be replaced with copper or aluminium wires, a metal foil or tape.

The conductors 10,11,20,21,30,42 can have cross-sections other than those shown in the examples, and more than one conductor may contain nanostructures. Those conductors 11, 21, 30, 42, 46 which contain nanostructures contain substantially homogeneously dispersed individual nanostructures in a matrix.

In a preferred embodiment of the invention a power cable is designed as shown in figure 3 where the conductor 30 contains 98 volume % of single-wall carbon nanotubes at least 1μm in length in a cross-linked polyethylene matrix. The semiconducting layers 31 and 33 contain particles of carbon black dispersed in cross-linked polyethylene. The insulation 32 comprises cross-linked polyethylene. The screen 34 comprises copper wire and the outer covering 35 comprises cross-linked polyethylene.

Alternative production methods of power cables according to the present invention, other than those exemplified in this document, are possible. The cable's insulation system and the semiconducting layers can be wound onto the conductor/s. One example of an insulation system is that used in conventional cellulose-based cables where cellulose-based material or synthetic paper is wound around the conductor/s. Other examples of insulation systems are those containing a solid porous, fibrous, or laminated structure impregnated with a dielectric substance, such as mineral oil which fills the pores/cavities in the insulation system.

**Claims**

1. A power cable (1,2,3,4) comprises one or more conductors (10,11,20,21,30,42,46) surrounded by insulation material (12,22,32,44,48) where at least one conductor (11,21,30,42,46) contains nanostructures, **characterized in that** the conductor containing nanostructures comprises a conducting matrix in which the nanostructures are arranged, and that adjacent nanostructures are in electrical contact with the conducting matrix.

2. A power cable according to claim 1, **characterized in that** the matrix comprises at least one of the following: a polymer, ceramic, metal, non-metal, fluid, gel, carbon-containing material such as graphite, amorphous carbon or fullerenes, an organic or inorganic material or a combination of said materials.

3. A power cable according to claims 1 or 2, **characterized in that** the individual nanostructures are substantially homogeneously dispersed in the matrix.

4. A power cable according to any of the previous claims, **characterized in that** the nanostructures comprise multi-wall nanotubes having two layers and a small outer diameter.

5. A power cable according to any of the previous claims, **characterized in that** the nanostructures comprise individual nanotubes are at least 1 μm long.

6. A power cable according to any of the previous claims, **characterized in that** the matrix contains less than 98 volume % nanostructures.

7. A power cable according to any of the previous claims, **characterized in that** the matrix comprises less than 95 volume % nanostructures.

8. A power cable according to any of the previous claims, **characterized in that** the matrix comprises less than 90 volume % nanostructures.

9. A power cable according to any of the previous claims, **characterized in that** the matrix comprises less than 80 volume % nanostructures.

10. A power cable according to any of the previous claims, **characterized in that** the matrix comprises less than 70 volume % nanostructures.

11. A power cable according to any of the previous claims, **characterized in that** the matrix comprises less than 50 volume % nanostructures.

12. A power cable according to claim 4, **characterized in that** the nanostructures are intercalated.

13. A power cable according to claim 12, **characterized in that** the intercalant is a substance which decreases the interaction between individual nanostructures.

14. A power cable according to claims 12 or 13, **characterized in that** the intercalant comprises an acceptor or a donator of charge carriers.

15. A power cable according to any of the previous claims, **characterized in that** the nanostructures comprise single-wall nanotubes, multiwall nanotubes, or a combination of both.

16. A power cable according to any of the previous claims, **characterized in that** the nanotubes are metallic, semiconducting, or a combination of both.

17. A power cable according to any of the previous claims, **characterized in that** the nanotubes are of the type (n,n), or (n,m), or a combination of both.

18. A power cable according to any of the previous claims, **characterized in that** the nanostructures' inner cavities are filled with atoms of carbon or other elements.

19. A power cable according to any of the previous claims, **characterized in that** the nanostructures are doped with an alkali metal or a halogen.

20. A power cable according to any of the previous claims, **characterized in that** the conductors (11,21,30,42,46) containing nanostructures in a matrix are extruded whereby the majority of individual nanostructures are oriented in the direction of the conductor's length.

21. A power cable according to any of the previous claims, **characterized in that** the conductors (42,46) containing individual nanostructures in a matrix are formed as concentric layers.

22. A power cable according to claim 21, **characterized in that** the concentric layers enclose a volume (41), which contains at least one of the following: insulation material, matrix material, reinforcement, a single/multi-mode optic fibre (40).

23. A power cable according to claim 22, **characterized in that** the reinforcement comprises steel, kevlar or nanostructures.

24. A power cable according to claim 22, **characterized in that** the single/multi-mode optic fibres (40) are arranged to transmit optic signals and/or to monitor the cable.

25. A power cable according to any of the previous claims, **characterized in that** the nanostructures comprise nanotubes, ropes or fibres that are woven, plaited or twisted to form a layer or a sheath.

26. A power cable according to any of the previous claims, **characterized in that** the conductors are surrounded by a semiconducting layer (31,33,43,45,47,49).

27. A power cable according to claim 26, **characterized in that** the semiconducting layer contains nanostructures.

28. A power cable according to any of the previous claims, **characterized in that** the insulation (12,22,32,44,48) comprises at least one of the following: a thermoplastic, polybutylethylene, polymethylpentene, a fluoropolymer, mica, polyvinylchloride, cross-linked material, rubber material.

29. A power cable according to any of claims 26-28, **characterized in that** it comprises at least one semiconducting layer (31,33,43,45,47,49) whereby the semiconducting layer comprises the same material as the insulation and contains conducting material.

30. A power cable according to claim 29, **characterized in that** the conducting material is carbon black, a metal, or contains nanostructures.

31. A method for producing a power cable (1,2,3,4) comprising at least one conductor (10,11,20,21,30,42,46) where at least one conductor (11,21,30,42,46) comprises nanostructures and where said at least one conductor is surrounded by insulation material (12,22,32,44,48), **characterized in that** the method comprises the steps of embedding nanostructures in a conducting matrix, such that adjacent nanostructures are in electrical contact with the conducting matrix, forming the material into a conductor (11,21,30,42,46) and surrounding the conductor with insulation material (12,22,32,44,48).

32. A method according to claim 31, **characterized in that** a semiconducting layer (31,33,43,45,47,49) is arranged at each side of the insulation material (12,22,32,44,48).

33. A method according to claim 32, **characterized in that** said at least one conductor (11,21,30,42,46), semiconducting layers (31,33,43,45,47,49), insulation material (12,22,32,44,48), matrix material and an outer cover (14,23,35,50) are formed into a cable by extrusion.

34. A method according to claim 32, **characterized in that** said semiconducting layers (31,33,43,45,47,49), insulation material (12,22,32,44,48), matrix material and outer cover (14,23,35,50) are wound onto said at least one conductor (11,21,30,42,46).

35. A method according to any of claims 31-34, **characterized in that** all the components of the power cable (1,2,3,4) comprise the same base material and are extruded together.

36. A method according to any of claims 31-35, **characterized in that** said cable (1,2,3,4) is vulcanised.

37. A method according to any of claims 31-36, **characterized in that** said cable (1,2,3,4) is arranged so that the current flowing through it is controlled by the influence of at least one of the following: mechanical, electrical, magnetic or electromagnetic means, diffusion or temperature.

38. The use of a power cable according to any of claims 1-30 to supply electricity.

39. The use of a power cable according to any of claims 1-30 for DC transmission.

40. The use of a power cable according to any of claims 1-30 for AC transmission.

41. The use of a power cable according to any of claims 1-30 for high frequency applications.

42. The use of a power cable according to any of claims 1-30 to supply electricity to machines.

43. The use of a power cable according to any of claims 1-30 for signal transmission within the communications field.

**Patentansprüche**

1. Stromleitung (1,2,3,4) umfassend, einen oder mehrere Leiter (10, 11, 20, 21, 30, 42, 46), die von einem Isoliermaterial (12, 22, 32, 44, 48) umgeben sind, wobei mindestens ein Leiter (11, 21, 30, 42, 46) Nanostrukturen enthält, **dadurch gekennzeichnet, dass** der die Nanostrukturen enthaltende Leiter eine leitende Matrix umfasst, in der die Nanostrukturen angeordnet sind, und dass benachbarte Nanostrukturen mit der leitenden Matrix in elektrischem Kontakt stehen.

2. Stromleitung nach Anspruch 1, **dadurch gekennzeichnet, dass** die Matrix mindestens eines der Nachstehenden umfasst: ein Polymer, Keramik, Metall, Nicht-Metall, Fluid, Gel, kohlenstoffhaltiges Material, wie Graphit, amorpher Kohlenstoff oder Fullerene, ein organisches oder anorganisches Material oder eine Kombination dieser Materialien.

3. Stromleitung nach Anspruch 1 oder 2, **dadurch gekennzeichnet, dass** die einzelnen Nanostrukturen im Wesentlichen homogen in der Matrix verteilt sind.

4. Stromleitung nach einem der vorstehenden Ansprüche, **dadurch gekennzeichnet, dass** die Nanostrukturen mehrwandige Nanoröhren mit zwei Schichten und einem kleinen äußeren Durchmesser umfassen.

5. Stromleitung nach einem der vorstehenden Ansprüche, **dadurch gekennzeichnet, dass** die Nanostrukturen einzelne Nanoröhren von mindestens 1 μm Länge umfassen.

6. Stromleitung nach einem der vorstehenden Ansprüche, **dadurch gekennzeichnet, dass** die Matrix weniger als 98 Vol.-% Nanostrukturen enthält.

7. Stromleitung nach einem der vorstehenden Ansprüche, **dadurch gekennzeichnet, dass** die Matrix weniger als 95 Vol.-% Nanostrukturen enthält.

8. Stromleitung nach einem der vorstehenden Ansprüche, **dadurch gekennzeichnet, dass** Die Matrix weniger als 90 Vol.-% Nanostrukturen enthält.

9. Stromleitung nach einem der vorstehenden Ansprüche, **dadurch gekennzeichnet, dass** die Matrix weniger als 80 Vol.-% Nanostrukturen enthält.

10. Stromleitung nach einem der vorstehenden Ansprüche, **dadurch gekennzeichnet, dass** die Matrix weniger als 70 Vol.-% Nanostrukturen enthält.

11. Stromleitung nach einem der vorstehenden Ansprüche, **dadurch gekennzeichnet, dass** die Matrix weniger als 50 Vol.-% Nanostrukturen enthält.

12. Stromleitung nach Anspruch 4, **dadurch gekennzeichnet, dass** die Nanostrukturen eingelagert sind.

13. Stromleitung nach Anspruch 12, **dadurch gekennzeichnet, dass** die Einlagerungsverbindung eine Substanz ist, die die Wechselwirkung zwischen einzelnen Nanostrukturen verringert.

14. Stromleitung nach Ansprüchen 12 oder 13, **dadurch gekennzeichnet, dass** die Einlagerungsverbindung einen Akzeptor oder einen Donor von Ladungsträgern umfasst.

15. Stromleitung nach einem der vorstehenden Ansprüche, **dadurch gekennzeichnet, dass** die Nanostrukturen einwandige Nanoröhren, mehrwandige Nanoröhren, oder eine Kombination von beidem umfassen.

16. Stromleitung nach einem der vorstehenden Ansprüche, **dadurch gekennzeichnet, dass** die Nanoröhren metallisch, halbleitend, oder eine Kombination von beidem sind.

17. Stromleitung nach einem der vorstehenden Ansprüche, **dadurch gekennzeichnet, dass** die Nanoröhren von dem (n,n)- oder (n,m)-Typ oder einer Kombination von beidem sind.

18. Stromleitung nach einem der vorstehenden Ansprüche, **dadurch gekennzeichnet, dass** die Höhlungen in den Nanostrukturen mit Kohlenstoffatomen oder anderen Elementen gefüllt sind.

19. Stromleitung nach einem der vorstehenden Ansprüche, **dadurch gekennzeichnet, dass** die Nanostrukturen mit einem Alkalimetall oder einem Halogen dotiert sind.

20. Stromleitung nach einem der vorstehenden Ansprüche, **dadurch gekennzeichnet, dass** die Nanostrukturen in einer Matrix enthaltenden Leiter (11, 21, 30, 42, 46) stranggepresst sind, wodurch die Mehrzahl der einzelnen Nanostrukturen in der Längsrichtung des Leiters ausgerichtet sind.

21. Stromleitung nach einem der vorstehenden Ansprüche, **dadurch gekennzeichnet, dass** die einzelne Nanostrukturen in einer Matrix enthaltenden Leiter (42, 46) als konzentrische Schichten gebildet sind.

22. Stromleitung nach Anspruch 21, **dadurch gekennzeichnet, dass** die konzentrischen Schichten ein Volumen (41) einschließen, das mindestens eines der Nachstehenden beinhaltet: Isoliermaterial, Matrixmaterial, Verstärkung, einen einfach/mehrfach-Modus Lichtwellenleiter (40).

23. Stromleitung nach Anspruch 22, **dadurch gekennzeichnet, dass** die Verstärkung Stahl, Kevlar oder Nanostrukturen umfasst.

24. Stromleitung nach Anspruch 22, **dadurch gekennzeichnet, dass** die einfach/mehrfach-Modus Lichtwellenleiter (40) angerodnet sind, um optische Signale zu übertragen und/oder die Leitung zu überwachen.

25. Stromleitung nach einem der vorstehenden Ansprüche, **dadurch gekennzeichnet, dass** die Nanostrukturen Nanoröhren, Stränge oder Fasern umfassen, die zur Bildung einer Schicht oder einer Ummantelung gewebt, geflochten oder verdreht sind.

26. Stromleitung nach einem der vorstehenden Ansprüche, **dadurch gekennzeichnet, dass** die Leiter von einer halbleitenden Schicht (31, 33, 43, 45, 47, 49) umgeben sind.

27. Stromleitung nach Anspruch 26, **dadurch gekennzeichnet, dass** die halbleitende Schicht Nanostrukturen enthält.

28. Stromleitung nach einem der vorstehenden Ansprüche, **dadurch gekennzeichnet, dass** die Isolierung (12, 22, 32, 44, 48) mindestens eines der Nachstehenden umfasst: einen Thermoplasten, Polybutylethylen, Polymethylpenten, ein Fluorpolymer, Glimmer, Polyvinylchlorid, vernetztes Material, Gummimaterial.

29. Stromleitung nach einem der Ansprüche 26-28, **da-**

**durch gekennzeichnet, dass** sie mindestens eine halbleitende Schicht (31, 33, 43, 45, 47, 49) umfasst, wobei die halbleitende Schicht das gleiche Material wie die Isolierung umfasst und ein leitendes Material enthält.

30. Stromleitung nach Anspruch 29, **dadurch gekennzeichnet, dass** das leitende Material schwarzer Kohlenstoff oder ein Metall ist, oder Nanostrukturen enthält.

31. Verfahren zur Herstellung einer Stromleitung (1, 2, 3, 4) mindestens einen Leiter (10, 11, 20, 21, 30, 42, 46) umfassend, wobei mindestens ein Leiter (11, 21, 30, 42, 46) Nanostrukturen umfasst und wobei der mindestens eine Leiter von einem Isoliermaterial (12, 22, 32, 44, 48) umgeben ist, **dadurch gekennzeichnet, dass** das Verfahren die Schritte umfasst

  - Einbetten von Nanostrukturen in eine Matrix, so dass benachbarte Nanostrukturen mit der leitenden Matrix in elektrischem Kontakt stehen,
  - Ausbilden des Materials in einen Leiter (11, 21, 30, 42, 46), und
  - Umgeben des Leiters mit einem Isoliermaterial (12, 22, 32, 44, 48).

32. Verfahren nach Anspruch 31, **dadurch gekennzeichnet, dass** eine halbleitende Schicht (31, 33, 43, 45, 37, 49) auf jeder Seite des Isoliersmaterials (12, 22, 32, 44, 48) angeordnet ist.

33. Verfahren nach Anspruch 32, **dadurch gekennzeichnet, dass** der mindestens eine Leiter (11, 21, 30, 42, 46), halbleitende Schichten (31, 33, 43, 45, 37, 49), Isoliermaterial (12, 22, 32, 44, 48), Matrixmaterial und eine äußere Hülle (14, 23, 35, 50) durch Strangpressen in eine Leitung gebildet werden.

34. Verfahren nach Anspruch 32, **dadurch gekennzeichnet, dass** die halbleitenden Schichten (31, 33, 43, 45, 37, 49), Isoliermaterial (12, 22, 32, 44, 48), Matrixmaterial und äußere Hülle (14, 23, 35, 50) auf den mindestens einen Leiter (11, 21, 30, 42, 46) gewunden werden.

35. Verfahren nach einem der Ansprüche 31-34, **dadurch gekennzeichnet, dass** die sämtlichen Bestandteile der Stromleitung (1, 2, 3, 4) das gleiche Grundmaterial umfassen und miteinander stranggepresst werden.

36. Verfahren nach einem der Ansprüche 31-35, **dadurch gekennzeichnet, dass** der Leiter (1, 2, 3, 4) vulkanisiert ist.

37. Verfahren nach einem der Ansprüche 31-36, **dadurch gekennzeichnet, dass** der Leiter (1, 2, 3, 4) derart angeordnet ist, dass der durch ihn fließende Strom von dem Einfluss von mindestens eines der Nachstehenden gesteuert wird: mechanische, elektrische, magnetische, oder elektromagnetische Mittel, Diffusion oder Temperatur.

38. Verwendung einer Stromleitung nach einem der Ansprüche 1-30 zur Elektrizitätsversorgung.

39. Verwendung einer Stromleitung nach einem der Ansprüche 1-30 zur Gleichstromübertragung.

40. Verwendung einer Stromleitung nach einem der Ansprüche 1-30 zur Wechselstromübertragung.

41. Verwendung einer Stromleitung nach einem der Ansprüche 1-30 für Hochfrequenzanwendungen.

42. Verwendung einer Stromleitung nach einem der Ansprüche 1-30 zur Elektrizitätsversorgung von Geräten.

43. Verwendung einer Stromleitung nach einem der Ansprüche 1-30 zur Signalübertragung im Nachrichtenbereich.

## Revendications

1. Câble de puissance (1, 2, 3, 4) qui comprend un ou plusieurs conducteurs (10, 11, 20, 21, 30, 42, 46) entouré(s) par un matériau isolant (12, 22, 32, 44, 48) où au moins un conducteur (11, 21, 30, 42, 46) contient des nanostructures, **caractérisé en ce que** le conducteur contenant des nanostructures comprend une matrice conductrice dans laquelle sont placées les nanostructures, et **en ce que** les nanostructures voisines sont en contact électrique avec la matrice conductrice.

2. Câble de puissance selon la revendication 1, **caractérisé en ce que** la matrice comprend au moins l'un des matériaux suivants : un polymère, une céramique, un matériau métallique, un matériau non métallique, un fluide, un gel, un matériau carboné comme du graphite, du carbone amorphe ou des fullerènes, un matériau organique ou inorganique ou une combinaison de ces matériaux.

3. Câble de puissance selon la revendication 1 ou 2, **caractérisé en ce que** les nanostructures individuelles sont dispersées de manière sensiblement homogène dans la matrice.

4. Câble de puissance selon l'une quelconque des revendications précédentes, **caractérisé en ce que** les nanostructures comprennent des nanotubes à parois multiples ayant deux couches et un petit diamètre extérieur.

5. Câble de puissance selon l'une quelconque des revendications précédentes, **caractérisé en ce que** les nanostructures comprennent des nanotubes individuels qui font au moins 1 μm de long.

6. Câble de puissance selon l'une quelconque des revendications précédentes, **caractérisé en ce que** la matrice contient moins de 98 % en volume de nanostructures.

7. Câble de puissance selon l'une quelconque des revendications précédentes, **caractérisé** on ce que la matrice contient moins de 95 % en volume de nanostructures.

8. Câble de puissance selon l'une quelconque des revendications précédentes, **caractérisé en ce que** la matrice contient moins de 90 % en volume de nanostructures.

9. Câble de puissance selon l'une quelconque des revendications précédentes, **caractérisé** on ce que la matrice contient moins de 80 % en volume de nanostructures.

10. Câble de puissance selon l'une quelconque des revendications précédentes, **caractérisé en ce que** la matrice contient moins de 70 % en volume de nanostructures.

11. Câble de puissance selon l'une quelconque des revendications précédentes, **caractérisé en ce que** la matrice contient moins de 50 % en volume de nanostructures.

12. Câble de puissance selon la revendication 4, **caractérisé en ce que** les nanostructures sont intercalées.

13. Câble de puissance selon la revendication 12, **caractérisé en ce que** le matériau intercalaire est une substance qui réduit l'interaction entre les nanostructures individuelles.

14. Câble de puissance selon la revendication 12 ou 13, **caractérisé en ce que** le matériau intercalaire comprend un accepteur ou un donneur de porteurs de charge.

15. Câble de puissance selon l'une quelconque des revendications précédentes, **caractérisé en ce que** les nanostructures comprennent des nanotubes à paroi simple, des nanotubes à parois multiples, ou une combinaison des deux.

16. Câble de puissance selon l'une quelconque des revendications précédentes, **caractérisé en ce que** les nanotubes sont métalliques, semiconducteurs ou une combinaison des deux.

17. Câble de puissance selon l'une quelconque des revendications précédentes, **caractérisé en ce que** les nanotubes sont du type (n,n), ou (n,m), ou une combinaison des deux.

18. Câble de puissance selon l'une quelconque des revendications précédentes, **caractérisé en ce que** les cavités intérieures des nanostructures sont remplies d'atomes de carbone ou d'autres éléments.

19. Câble de puissance selon l'une quelconque des revendications précédentes, **caractérisé en ce que** les nanostructures sont dopées avec un métal alcalin ou un halogène.

20. Câble de puissance selon l'une quelconque des revendications précédentes, **caractérisé en ce que** les conducteurs (11, 21, 30, 42, 46) contenant des nanostructures dans une matrice sont extrudés, grâce à quoi la majorité des nanostructures individuelles sont orientées dans le sens de la longueur du conducteur.

21. Câble de puissance selon l'une quelconque des revendications précédentes, **caractérisé en ce que** les conducteurs (42, 46) contenant des nanostructures individuelles dans une matrice sont formés en couches concentriques.

22. Câble de puissance selon la revendication 21, **caractérisé en ce que** les couches concentriques renferment un volume (41), qui contient au moins l'un des matériaux suivants : un matériau isolant, un matériau de matrice, un matériau de renforcement, une fibre optique (40) monomodale ou multimodale.

23. Câble de puissance selon la revendication 22, **caractérisé en ce que** le matériau de renforcement comprend de l'acier, du kevlar ou des nanostructures.

24. Câble de puissance selon la revendication 22, **caractérisé en ce que** les fibres optiques (40) monomodales ou multimodales sont adaptées pour transmettre des signaux optiques et/ou pour surveiller le câble.

25. Câble de puissance selon l'une quelconque des revendications précédentes, **caractérisé en ce que** les nanostructures comprennent des nanotubes, des cordes ou des fibres qui sont tissé(e)s, tressé(e)s ou torsadé(e)s pour former une couche ou une gaine.

**26.** Câble de puissance selon l'une quelconque des revendications précédentes, **caractérisé en ce que** les conducteurs sont entourés d'une couche semiconductrice (31, 33, 43, 45, 47, 49).

**27.** Câble de puissance selon la revendication 26, **caractérisé en ce que** la couche semiconductrice contient des nanostructures.

**28.** Câble de puissance selon l'une quelconque des revendications précédentes, **caractérisé en ce que** le matériau isolant (12, 22, 32, 44, 48) comprend au moins l'un des matériaux suivants : un thermoplastique, du poly(butyl-éthylène), du poly(méthyl-pentène), un polymère fluoré, du mica, du poly(chlorurc de vinyle), un matériau réticulé, un matériau de type caoutchouc.

**29.** Câble de puissance selon l'une quelconque des revendications 26 à 28, **caractérisé en ce qu'**il comprend au moins une couche semiconductrice (31, 33, 43, 45, 47, 49), la couche semiconductrice comprenant le même matériau que l'isolant et contenant un matériau conducteur.

**30.** Câble de puissance selon la revendication 29, **caractérisé en ce que** le matériau conducteur est du noir de carbone, un métal, ou bien contient des nanostructures.

**31.** Procédé de fabrication d'un câble de puissance (1, 2, 3, 4) comprenant au moins un conducteur (10, 11, 20, 21, 30, 42, 46) où au moins un conducteur (11, 21, 30, 42, 46) comprend des nanostructures et où ledit au moins un conducteur est entouré par un matériau isolant (12, 22, 32, 44, 48), **caractérisé en ce que** le procédé comprend les étapes consistant à noyer des nanostructures dans une matrice conductrice, de telle manière que les nanostructures voisines sont en contact électrique avec la matrice conductrice, à mettre le matériau sous la forme d'un conducteur (11, 21, 30, 42, 46) et à entourer le conducteur de matériau isolant (12, 22, 32, 44, 48).

**32.** Procédé selon la revendication 31, **caractérisé en ce qu'**une couche semiconductrice (31, 33, 43, 45, 47, 49) est placée de chaque côté du matériau isolant (12, 22, 32, 44, 48).

**33.** Procédé selon la revendication 32, **caractérisé en ce que** ledit au moins un conducteur (11, 21, 30, 42, 46), les couches semiconductrices (31, 33, 43, 45, 47, 49), le matériau isolant (12, 22, 32, 44, 48), le matériau de matrice et une protection extérieure (14, 23, 35, 50) sont mis sous la forme d'un câble au moyen d'un procédé d'extrusion.

**34.** Procédé selon la revendication 32, **caractérisé en ce que** lesdites couches semiconductrices (31, 33, 43, 45, 47, 49), le matériau isolant (12, 22, 32, 44, 48), le matériau de matrice et la protection extérieure (14, 23, 35, 50) sont enroulés sur ledit au moins un conducteur (11, 21, 30, 42, 46).

**35.** Procédé selon l'une quelconque des revendications 31 à 34, **caractérisé en ce que** tous les composants du câble de puissance (1, 2, 3, 4) comprennent le même matériau de base et sont extrudés ensemble.

**36.** Procédé selon l'une quelconque des revendications 31 à 35, **caractérisé en ce que** ledit câble (1, 2, 3, 4) est vulcanisé.

**37.** Procédé selon l'une quelconque des revendications 31 à 36, **caractérisé en ce que** ledit câble (1, 2, 3, 4) est adapté pour que l'intensité du courant qu'il transporte soit régulée par l'influence d'au moins l'un des éléments suivants : un moyen mécanique, électrique, magnétique ou électromagnétique, la diffusion ou la température.

**38.** Utilisation d'un câble de puissance conforme à l'une quelconque des revendications 1 à 30 pour fournir de l'électricité.

**39.** Utilisation d'un câble de puissance conforme à l'une quelconque des revendications 1 à 30 pour transmettre du courant continu.

**40.** Utilisation d'un câble de puissance conforme à l'une quelconque des revendications 1 à 30 pour transmettre du courant alternatif.

**41.** Utilisation d'un câble de puissance conforme à l'une quelconque des revendications 1 à 30 pour des applications à haute fréquence.

**42.** Utilisation d'un câble de puissance conforme à l'une quelconque dos revendications 1 à 30 pour fournir de l'électricité à des machines.

**43.** Utilisation d'un câble de puissance conforme à l'une quelconque des revendications 1 à 30 pour transmettre des signaux dans le domaine des télécommunications.

Fig. 1

Fig. 2

Fig. 3

Fig. 4